# FASCICULE DE BREVET EUROPEEN

(11) **EP 1 325 180 B1**
(45) Date de publication et mention de la délivrance du brevet: **29.12.2004**
(21) Numéro de dépôt: 01972213.1
(22) Date de dépôt: 26.09.2001
(51) Int. Cl.: D01D 5/08, D01D 5/16, C03B 37/02

(54) **PROCEDE ET DISPOSITIF DE PRODUCTION D'UN FIL COMPOSITE**
VORRICHTUNG UND VERFAHREN ZUR HERSTELLUNG EINES VERBUNDFADENS
METHOD AND DEVICE FOR PRODUCING A COMPOSITE YARN

(30) Priorité: 11.10.2000 FR 0012990
(43) Date de publication de la demande: 09.07.2003
(73) Titulaire: Saint-Gobain Vetrotex France, 73000 Chambéry (FR)
(72) Inventeur: BOISSONNAT, Philippe, F-73190 Challes-les-Eaux (FR); RICHARD, Daniel, F-73800 Sainte Hélène du Lac (FR)
(74) Mandataire: Muller, René
(86) Numéro de dépôt international: PCT/FR2001/002979
(87) Numéro de publication internationale: WO 2002/031235

(56) Documents cités:
- EP-A- 0 599 695
- EP-A- 0 616 055
- PATENT ABSTRACTS OF JAPAN vol. 015, no. 206 (C-0835), 27 mai 1991 (1991-05-27) & JP 03 059038 A (TOYOBO CO LTD), 14 mars 1991 (1991-03-14)

## Description

La présente invention concerne un procédé et un dispositif de fabrication d'un fil composite comprenant des filaments continus de verre et des filaments continus de matière organique thermoplastique entremêlés.

On connaît déjà des procédés permettant de produire un fil composite comprenant de tels filaments de verre et de matière organique thermoplastique.

Dans EP-A-0 367 661, on décrit un procédé mettant en oeuvre une première installation comprenant une filière, à partir de laquelle sont étirés des filaments continus de verre, et une deuxième installation comprenant une tête de filage, alimentée sous pression par une matière organique thermoplastique qui délivre des filaments continus organiques. Lors de l'assemblage, les deux types de filaments peuvent être sous la forme de nappes, ou de nappe et de fil. Dans le fil composite verre/thermoplastique obtenu, les filaments thermoplastiques entourent les filaments de verre et les préservent des frottements générés lorsque ledit fil entre en contact avec des surfaces solides. Cet arrangement ne permet cependant pas d'obtenir un mélange parfaitement homogène des deux types de filaments : une coupe droite du fil composite montre des zones distinctes pour chaque type de filaments.

Ce fil composite a par ailleurs tendance à onduler. Ainsi, lorsque le fil est enroulé sous la forme de bobines, le retrait des filaments thermoplastiques produit une ondulation sur toute la périphérie de la bobine. Ce phénomène présente des inconvénients : il nécessite l'emploi de manchettes épaisses pour la réalisation de bobines afin qu'elles résistent au frettage exercé par le fil composite, d'une part, et perturbe le dévidage de la bobine du fait que les caractéristiques géométriques ne sont pas conservées, d'autre part.

Dans EP-A-0 505 275; on propose un procédé de préparation de fil composite semblable à celui décrit précédemment dans EP-A-0 367 661 qui utilise au moins une tête de filage habituellement utilisée dans le domaine de l'industrie des fibres synthétiques. De cette manière, on peut obtenir un fil composite, formé d'un ou plusieurs fils de verre environnés de filaments organiques, qui est indépendant de la configuration de la tête de filage utilisée pour extruder les filaments organiques.

Ce document préconise l'étirement des filaments organiques en une ou plusieurs nappes délimitant, en partie ou en totalité, une zone de forme conique ou pyramidale comprenant un secteur ouvert par lequel est introduit le fil de verre. Le fil composite obtenu présente les mêmes défauts (répartition non homogène des filaments et ondulation) que le fil décrit précédemment.

Le document EP-A-0 599 695 décrit la fabrication d'un fil composite verre/thermoplastique qui consiste à mêler un faisceau ou une nappe de filaments continus de verre issus d'une filière et une nappe de filaments continus thermoplastiques issus d'une tête de filage, avec une vitesse lors de leur pénétration dans le faisceau ou la nappe de filaments de verre qui est supérieure à la vitesse d'étirage des filaments de verre. Avec ce procédé, les filaments thermoplastiques sont surétirés pour compenser leur retrait, de sorte que le fil composite ne présente pas d'ondulation lors de sa formation et reste stable dans le temps.

Dans EP-A-0 616 055, il est proposé un autre procédé de production de fil composite verre/thermoplastique qui consiste à mêler une nappe de filaments thermoplastiques à un faisceau ou une nappe de filaments de verre, les filaments thermoplastiques étant, en amont du point de convergence, chauffés à une température supérieure à leur température de transformation, étirés puis refroidis.

Pour des raisons de réduction des coûts de fabrication notamment, on cherche à accroître la capacité de production des filières industrielles en augmentant le nombre d'orifices, pour atteindre 800 voire 1600 ou 2400 orifices.

Avec les procédés qui viennent d'être décrits, on peut difficilement produire dans les conditions précitées un fil composite dont la répartition des deux types de filaments est homogène. En effet, lorsque le nombre d'orifices de la filière devient important, on constate que la projection de la nappe de filaments thermoplastiques dans le faisceau ou la nappe de filaments de verre n'est plus régulière, les filaments thermoplastiques ayant tendance à se répartir préférentiellement au centre du faisceau ou de la nappe des filaments de verre. Par ailleurs, lorsque la longueur de la filière augmente, la distance parcourue par les filaments de verre situés au centre et aux extrémités de la filière n'est plus identique. Il s'ensuit un écart dans le diamètre des filaments ainsi produits.

Le problème posé par la qualité de l'entremêlement des filaments de verre et de thermoplastique au sein d'un fil composite mettant en oeuvre une filière de grande taille (nombre d'orifices supérieur à 800) est résolu par un procédé de fabrication d'un fil composite selon revendication 1 formé par l'entremêlement de filaments continus de verre issus d'une filière et de filaments continus de matière organique thermoplastique issus d'une tête de filage dans lequel on sépare les filaments de verre en plusieurs nappes, on sépare les filaments thermoplastiques en plusieurs nappes et on projette les filaments thermoplastiques dans les filaments de verre afin de les mêler, à raison d'au moins une nappe de filaments thermoplastiques dans chaque nappe de filaments de verre, les filaments mêlés étant ensuite rassemblés en au moins un fil composite.

La séparation ainsi réalisée permet d'obtenir un excellent entremêlement des filaments de verre et des filaments thermoplastiques qui se traduit par une répartition homogène et uniforme desdits filaments comme le montrent l'indice d'entremêlement et la coupe droit de fil composite, donnés plus loin. Selon un mode de réalisation préféré de l'invention, on associe à chaque nappe de filaments de verre, par projection, une seule nappe de filaments thermoplastiques.

Grâce à l'invention, il est possible de former un seul fil composite verre/thermoplastique de titre élevé (masse linéique de l'ordre de 3000 g/km), ou encore plusieurs fils de titre inférieur qui peuvent être enroulés sur une ou plusieurs manchette(s) portée(s) par la même broche d'un bobinoir.

Un autre avantage du procédé selon l'invention réside dans le fait qu'il est possible d'obtenir le fil composite directement à partir des matières fondues constitutives des filaments, sans passer par des étapes intermédiaires d'assemblage et de bobinage des filaments. Ce procédé est à distinguer des procédés décrits notamment dans WO-A-96/10660, WO-A-97/10101 et WO-A-96/40596 qui procèdent par association d'une nappe de filaments de verre formés à partir d'une filière contenant du verre fondu et de fil(s) de matière thermoplastique obtenu(s) par dévidage d'une ou plusieurs bobines.

Un autre avantage du procédé selon l'invention est qu'il permet de former un fil composite à partir de filaments thermoplastiques de nature différente en utilisant une même tête de filage. Cette manière de procéder permet notamment d'éviter la multiplication des têtes de filage et donc de ne pas encombrer l'espace à proximité de la filière.

L'invention propose également un dispositif selon revendication 10 permettant la mise en oeuvre de ce procédé.

Selon l'invention, pour permettre la fabrication d'un fil composite formé de filaments continus de verre et de filaments continus thermoplastiques entremêlés, ce dispositif comprend d'une part une installation comprenant au moins une filière, alimentée en verre fondu, dont la face inférieure comporte une multitude d'orifices, en général au moins 800 orifices, cette filière étant associée à un dispositif enducteur et à des moyens permettant de séparer les filaments de verre en plusieurs faisceaux ou nappes, et d'autre part une installation comprenant au moins une tête de filage alimentée sous pression en matière organique thermoplastique fondue, cette tête de filage étant associée à des moyens permettant de séparer les filaments thermoplastiques en plusieurs nappes et étant associée à un étireur et à des moyens de projection desdits filaments en vue de les mêler aux filaments de verre, enfin des moyens communs aux deux installations permettant l'assemblage et de bobinage d'au moins un fil composite. L'étireur utilisable dans le cadre de l'invention peut par exemple être du type à tambours décrit dans WO-A-98/01751 ou dans EP-A-0 599 695, lequel peut comporter en outre un moyen de chauffage comme proposé dans EP-A-0 616 055.

De façon préférée, on procède à la séparation des filaments de verre en autant de nappes que de nappes de filaments thermoplastiques, chaque nappe de filaments thermoplastiques étant par la suite projetée dans une seule nappe de filaments de verre. De manière particulièrement avantageuse, les nappes de filaments thermoplastiques sont identiques, d'une part, et les faisceaux ou les nappes de filaments de verre sont identiques, d'autre part.

Selon un mode de réalisation préféré de l'invention, les moyens de séparation des filaments de verre sont disposés de telle sorte que chaque nappe délimitée par le rouleau enducteur et lesdits moyens a la forme d'un triangle isocèle dans lequel sont projetés les filaments thermoplastiques. De cette façon, la distance parcourue par les filaments externes est identique ce qui permet de réduire la dispersion du diamètre des filaments de verre.

Le moyen permettant de séparer les filaments de verre en plusieurs nappes peut être constitué par des peignes d'embarrage ou des roulettes à gorge, fixes ou mobiles, ce moyen ayant en outre pour fonction d'absorber les tensions au niveau du dispositif de bobinage. Cette disposition est doublement avantageuse : elle permet la séparation les filaments en nappes et aussi l'assemblage des filaments de verre et de thermoplastique en vue de former le(s) fil(s) composite(s). On peut ainsi aisément obtenir la géométrie désirée de chaque nappe en réglant la distance entre lesdits moyens de séparation et le rouleau enducteur, d'une part, et la distance entre ces mêmes moyens, d'autre part.

Selon un autre mode de réalisation préféré de l'invention, les nappes de filaments thermoplastiques passent sur un étireur commun, et chaque nappe est associée aux filaments de verre au moyen d'un dispositif indépendant de projection. L'orientation du dispositif de projection permet d'ajuster au mieux la projection des fils thermoplastiques dans la nappe de filaments de verre, ce qui conduit à un excellent entremêlement des filaments.

Le moyen permettant de projeter les filaments thermoplastiques peut être constitué notamment par un système Venturi. Ce dispositif présente l'avantage de créer un entremêlement des filaments de verre et des filaments thermoplastiques, ceux-ci arrivant avec des vitesses identiques. On peut ainsi former des filaments entremêlés qui sont linéaires.

Dans une variante, il est possible d'obtenir des fils composites dont les filaments de verre sont linéaires et les filaments thermoplastiques sont ondulés. Ce type de fil, plus ou moins volumineux, est recherché dans certaines applications textiles. Pour cela, il suffit de conférer aux filaments thermoplastiques une vitesse supérieure à celle des filaments de verre. La vitesse supérieure des filaments thermoplastiques est fixée au niveau de l'étireur par l'intermédiaire de la vitesse de rotation des rouleaux à tambour.

Les dispositifs décrits précédemment permettent d'utiliser des filières comportant un nombre élevé d'orifices pour produire en continu, directement et avec un coût plus réduit, un fil composite composé de filaments de verre et de filaments thermoplastiques répartis de manière homogène au sein de ce fil.

De tels dispositifs présentent également l'avantage de réaliser, avec une productivité élevée, des enroulements de fils composites de titre élevé (de l'ordre de 3000 tex ou g/km) ou encore plusieurs enroulements simultanés de fils composites, en continu et directement à partir des matières qui constituent les filaments.

D'autres détails et caractéristiques avantageuses de l'invention apparaissent à la lecture des exemples de dispositifs illustrés par les figures suivantes :
- la figure 1 est vue schématique de l'ensemble d'une installation selon un premier mode de réalisation de l'invention,
- la figure 2 est une vue schématique de l'ensemble d'une installation selon un deuxième mode de réalisation de l'invention,
- la figure 3A est une coupe droite vue à la loupe binoculaire de fils composites obtenus dans des conditions conformes à l'invention,
- la figure 3B est une représentation schématique de cette coupe,
- la figure 4A est une coupe droite vue à la loupe binoculaire de fils composites obtenus dans des conditions non conformes à l'invention, et
- la figure AB est une représentation de cette coupe.

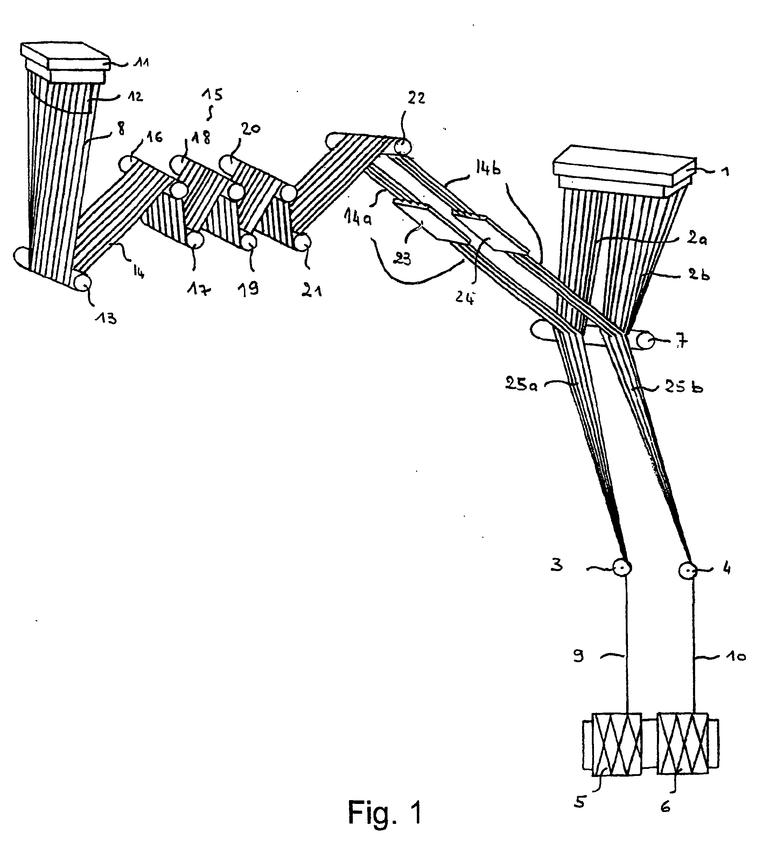

L'invention illustrée par la figure 1 comprend une filière 1, alimentée en verre fondu soit depuis l'avant-corps d'un four qui achemine directement le verre jusqu'à son sommet, soit par une trémie contenant du verre froid, par exemple sous forme de billes qui tombent par simple gravité.

Quelle que soit l'alimentation, la filière 1 est habituellement en alliage platine-rhodium et elle est chauffée par effet Joule de façon à refondre le verre ou à le maintenir à une température élevée. De la filière 1 s'écoule une multitude de filets de verre fondu qui sont étirés sous la forme de deux faisceaux 2a, 2b de filaments par un dispositif, non représenté, permettant également de former les bobines 5 et 6. Les faisceaux 2a, 2b sont maintenus séparés au moyen de deux roulettes à gorge 3 et 4. Sur le trajet des faisceaux 2a, 2b est disposé un rouleau enducteur 7, par exemple en graphite, qui dépose sur les filaments de verre un ensimage destiné à prévenir ou limiter les frottements des filaments sur les organes avec lesquels ils entrent en contact. L'ensimage peut être aqueux ou anhydre (c'est-à-dire contenant moins de 5 % d'eau) et comprendre des composés, ou des dérivés de ces composés, qui entrent dans la constitution des filaments thermoplastiques 8 venant s'associer aux filaments de verre pour former les fils composites 9 et 10.

Sur la figure 1 est également représentée schématiquement une tête de filage 11 d'où sont extrudés les filaments thermoplastiques 8. La tête de filage 11 est alimentée par un matériau thermoplastique fondu, par exemple issu d'une extrudeuse, non représentée, alimentée par des granulés, qui s'écoule sous pression par de multiples orifices placés sous la tête de filage 11, pour former les filaments 8 par étirage et refroidissement. Le refroidissement des filaments est effectué par convection forcée, au moyen d'un dispositif de conditionnement 12 de forme adaptée à la tête de filage 11 et qui génère un écoulement d'air laminaire perpendiculaire aux filaments. L'air de refroidissement a un débit, une température et une hygrométrie maintenus constants. Les filaments 8 passent ensuite sur un rouleau 13 qui permet, d'une part, de les rassembler sous la forme d'une nappe 14 et, d'autre part, de dévier leur trajectoire. Après passage sur le rouleau 13, la nappe 14 de filaments thermoplastiques est dirigée vers l'étireur à tambours 15, étireur qui est constitué ici de six tambours 16, 17, 18, 19, 20, 21.

Les tambours 16, 17, 18, 19, 20, 21 ont des vitesses différentes, de sorte qu'ils créent une accélération dans le sens du défilement de la nappe 14. Dans le cas présent, ces tambours fonctionnent par paire. Aux tambours 16, 17 formant la première paire est associé un dispositif de chauffage, non représenté, qui peut être par exemple un système électrique permettant par contact d'accroître la température des fils thermoplastiques d'une manière homogène et rapide. L'élévation de la température dépend de la nature du thermoplastique utilisé. Les tambours 16, 17 sont animés d'une vitesse identique qui permet l'étirage des filaments thermoplastiques 8 depuis la tête de filage 11.

La deuxième paire de tambours 18, 19 est animée d'une vitesse supérieure à celle de la première paire. La nappe 14 des filaments thermoplastiques chauffés par passage sur la première paire de tambours 16, 17 subit une accélération due à la différence de vitesse des deux paires de tambours, accélération qui se traduit par une élongation des filaments de la nappe 14 et une modification de leur structure.

La dernière paire de tambours 20, 21 est animée d'une vitesse identique ou supérieure à celle de la paire précédente et comporte un dispositif de refroidissement, non représenté, par exemple du type " water-jacket ", qui permet de figer la structure des filaments de la nappe 14.

Le chauffage et le refroidissement de la nappe 14 de filaments thermoplastiques doivent être effectués rapidement et de façon homogène.

L'étireur 15 peut comprendre un nombre plus élevé de tambours, à condition que soient respectées les trois zones précitées : chauffage, étirage et refroidissement. Par ailleurs, chacune de ces zones peut n'être constituée que d'un seul tambour. L'étireur peut être également constitué d'une succession de groupes constitué par les trois zones qui viennent d'être citées.

Pour contribuer aux étapes de chauffage ou de refroidissement, il est également possible d'intercaler des dispositifs fixes, chauffants ou de refroidissement, entre les rouleaux de l'étireur 15 sur lesquels vient glisser la nappe 14 de filaments thermoplastiques.

La nappe 14 de filaments thermoplastiques passe ensuite sur un rouleau de déviation 22, à partir duquel elle est divisée en deux nappes 14a, 14b, qui passent ensuite au travers de deux systèmes Venturi 23, 24 indépendants. Les systèmes 23, 24 permettent, d'une part, de maintenir les filaments thermoplastiques individualisés et, d'autre part, de les projeter dans les filaments de verre venant des faisceaux 2a, 2b. Les dispositifs 23, 24 ne communiquent aucune vitesse supplémentaire aux nappes 14a, 14b par un apport d'air comprimé, ce qui limite le risque de perturbation desdits filaments de verre.

La jonction des nappes 14a, 14b de filaments thermoplastiques et des filaments de verre issus des faisceaux 2a, 2b a lieu sur la génératrice du rouleau enducteur 7.

Les nappes 25a, 25b de filaments entremêlés de verre et thermoplastiques passe ensuite sur les roulettes 3, 4 qui permettent d'assembler les filaments de verre et thermoplastiques en deux fils composites 9, 10, lesquels sont immédiatement enroulés sous la forme des deux bobines 5, 6 grâce au dispositif d'étirage, non représenté, qui fonctionne à une vitesse linéaire donnée maintenue constante pour garantir la masse linéique désirée.

Cette vitesse linéaire qui permet l'étirage des filaments de verre est ici identique à celle que communiquent les tambours 20, 21 à la nappe 14 des filaments thermoplastiques. De cette façon, les filaments thermoplastiques ont la même vitesse lors du mélange et le fil composite ne présente pas d'ondulation lors de sa formation.

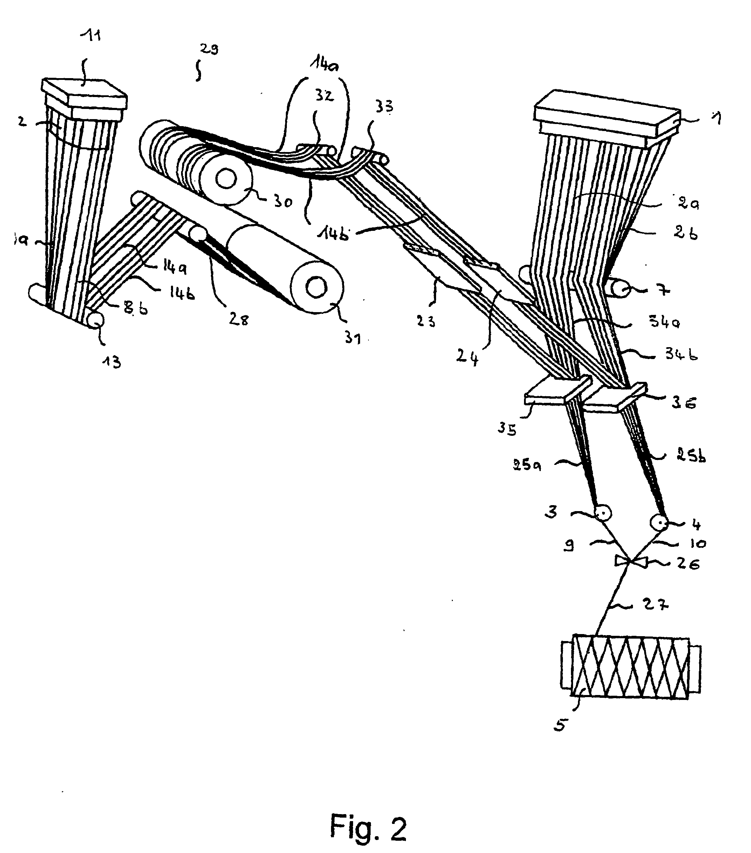

Dans la figure 2 illustrant le deuxième mode de réalisation de l'invention, les éléments identiques à ceux de la figure 1 portent les mêmes numéros de référence.

Des filets de verre fondu s'écoulant d'une filière 1 sont étirés en deux faisceaux 2a, 2b de filaments de verre grâce à un dispositif, non représenté, qui permet également de former la bobine 5.

Les faisceaux 2a, 2b passent sur un rouleau enducteur 7, puis sur deux roulettes 3, 4 de séparation des faisceaux et d'assemblage des filaments, pour former deux fils composites 9, 10 lesquels sont ensuite réunis par un élément d'assemblage 26 pour constituer le fil composite 27 qui est enroulé sous la forme de la bobine 5.

Simultanément, on extrude des filaments thermoplastiques sous la forme de deux faisceaux 8a, 8b au moyen de la tête de filage 11, comportant deux séries distinctes d'orifices, remplie de matière thermoplastique à l'état fondu. Les faisceaux 8a, 8b sont refroidis par le dispositif de conditionnement 12, puis réunis sur le rouleau 13 en deux nappes 14a, 14b qui sont dirigées vers un deuxième rouleau 28 de déviation puis sur un étireur 29 formé ici d'une paire de tambours 30, 31.

Les tambours 30, 31 ont une vitesse de rotation identique, mais ils peuvent aussi fonctionner avec des vitesses différentes. Dans le cas présent, la vitesse du tambour 31 est supérieure à la vitesse du dispositif servant à étirer les filaments de verre et former la bobine 5, permettant ainsi la relaxation des filaments thermoplastiques.

L'étireur 29 peut être constitué d'une succession de paires de tambours, chauffés ou refroidis, entre lesquelles peuvent être intercalés des dispositifs chauffants ou de refroidissement.

Les nappes 14a et 14b de filaments thermoplastiques relâchés passent sur deux rouleaux 32, 33 orientables, puis au travers des systèmes Venturi 23, 24 avant d'être projetées individuellement dans les nappe 34a, 34b de filaments de verre.

La jonction des nappes 14a, 14b de filaments thermoplastiques et des nappes 34a, 34b de filaments de verre a lieu entre le rouleau enducteur 7 et les roulettes 3, 4. Cette disposition est particulièrement avantageuse car elle permet de bien adapter la géométrie des nappes de filaments de verre 34a, 34b et procure une répartition homogène des deux types de filaments. Des déflecteurs 35, 36 munis d'encoches assurent le maintien, en particulier sur les bords, des filaments et permettent d'atténuer la perturbation subie par les nappes 34a, 34b de filaments de verre au moment de la projection des nappes 14a, 14b de filaments thermoplastiques.

Les nappes 25a, 25b de filaments entremêlés de verre et thermoplastiques passent ensuite sur la paire de roulettes 3, 5 qui permet d'assembler les filaments et de former deux fils composites 9, 10. Ces fils sont ensuite réunis en un fil composite 27 qui est immédiatement enroulé sous la forme de la bobine 5 par le dispositif, non représenté, permettant l'étirage des filaments de verre à la vitesse désirée.

Comme indiqué précédemment, la vitesse d'étirage des filaments de verre est ici inférieure à la vitesse du tambour 30 ce qui permet la relaxation des filaments thermoplastiques avant leur passage sur les rouleaux 32, 33. De cette manière, la rétractation ultérieure des filaments thermoplastiques ne provoque pas d'ondulation des filaments de verre et on évite le frettage du fil sur la bobine 5.

Selon l'un ou l'autre mode de réalisation de l'invention, il est également possible de fabriquer un fil composite à haute capacité de remplissage, c'est-à-dire un fil qui comporte des filaments de verre linéaires et des filaments thermoplastiques ondulés. Ce type de fil composite s'avère avantageux dans certaines applications textiles nécessitant une épaisseur du tissu relativement importante.

Pour réaliser un tel fil composite, il est préférable de modifier le dispositif représenté sur les figures 1 et 2, en augmentant la vitesse communiquée à la nappe de filaments thermoplastiques par l'intermédiaire de l'étireur 15, 29, plus précisément par les tambours 18, 19, 31. En modifiant la vitesse de projection des filaments thermoplastiques dans les filaments de verre, il est possible de régler l'amplitude des ondulations des filaments thermoplastiques, et donc de fabriquer un fil composite "voluminisé" ou "texturé" c'est-à-dire présentant un volume plus ou moins important.

Sur les figures 1 et 2, les nappes 14a, 14b de filaments thermoplastiques sont projetés dans les filaments de verre sur la génératrice du rouleau enducteur 7 et après leur passage sur ledit rouleau, respectivement. Il est cependant possible de projeter les filaments thermoplastiques dans les faisceaux 2a, 2b formés par les filaments de verre, c'est-à-dire avant le passage de ces derniers sur le rouleau enducteur 7. Cette manière d'effectuer l'entremêlement est cependant plus difficile à mettre en oeuvre car les filaments thermoplastiques sont projetés dans les filaments de verre alors qu'ils ne sont revêtus d'aucun ensimage. Il est alors nécessaire de contrôler précisément les conditions de la projection afin d'éviter que les filaments de verre, à ce stade particulièrement fragiles, puissent être rompus.

Les bobines obtenues à l'aide du procédé selon l'invention sont constituées d'un fil composite qui présente un excellent indice d'entremêlement. Dans le cadre de la présente invention, il faut comprendre par "excellent indice de d'entremêlement" un indice d'entremêlement dont la valeur moyenne est inférieure à 12. La valeur moyenne de l'indice d'entremêlement est mesurée de la manière suivante :
- on réalise un certain nombre de coupes transversales du fil composite sur une longueur donnée,
- on effectue un maillage de chacune des coupes,
- sur chaque maille ainsi définie, on mesure, par une méthode micrographique du type analyse d'image, la répartition surfacique entre les filaments de verre et les filaments thermoplastiques,
- on calcule, pour chaque coupe, l'écart-type des répartitions surfaciques de l'ensemble des mailles, qui est l'indice d'entremêlement de la coupe considérée, et
- on calcule la valeur moyenne de l'indice d'entremêlement pour toutes les coupes. En règle générale, les bobines obtenues dans le cadre de l'invention sont constituées d'un fil composite dont les filaments de verre ne sont pas ondulés, les filaments thermoplastiques pouvant, quant à eux présenter des ondulations. De ce fait, on peut facilement extraire le fil soit en le déroulant, soit en le dévidant par l'intérieur après avoir retiré la manchette servant de support à la (aux) bobine(s), ce qui ne pose aucun problème.

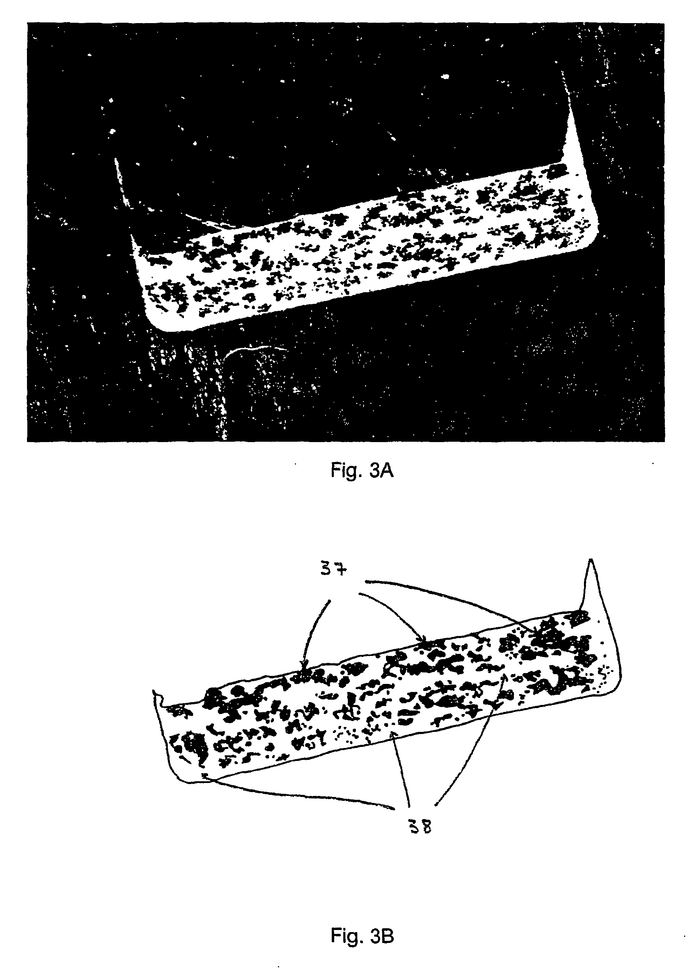

La figure 3A est une coupe transversale vue à la loupe binoculaire d'un fil composite conforme à l'invention constitué de 800 filaments de verre de 18,5 µm de diamètre, et de 800 filaments de polypropylène (titre du fil mixte : 932 tex; 60 % en poids de verre et 40 % en poids de polypropylène) obtenu selon le mode de réalisation de la figure 2. Le fil composite possède un indice d'entremêlement égal à 9,86. Sur la figure 3B, qui est une représentation schématique de la coupe de la figure 3A, les filaments de verre 37 (en noir) et les filaments de polypropylène 38 (en blanc) sont sensiblement de même taille et sont répartis de manière homogène au sein du fil.

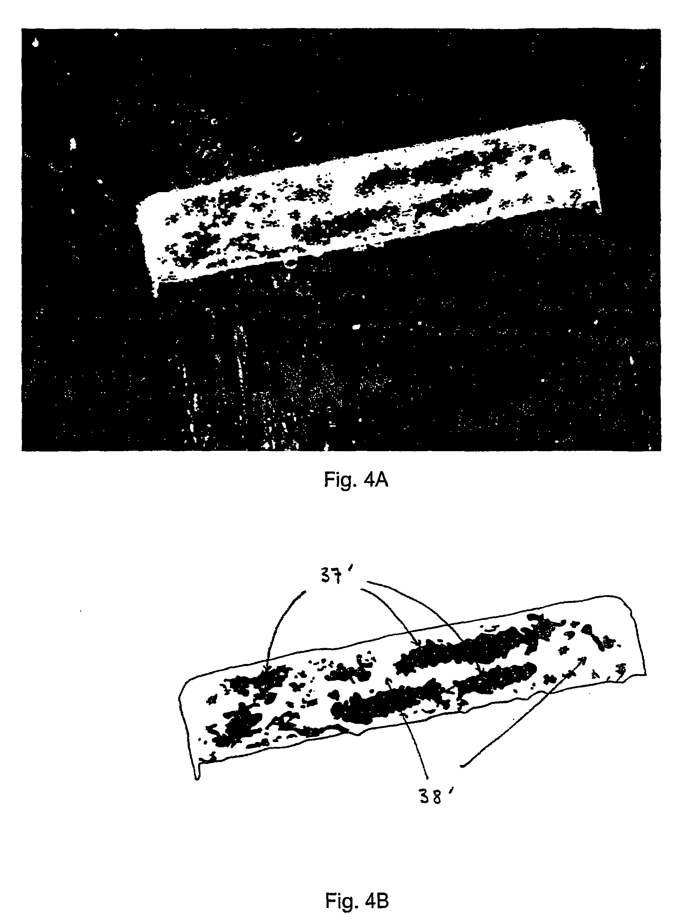

La figure 4A est une coupe transversale d'un fil composite non conforme à l'invention obtenu par projection d'une seule nappe de 800 filaments de polypropylène dans une seule nappe de 800 filaments de verre. Ce fil possède un indice d'entremêlement égal à 15. Sur la figure 4B, qui correspond à la représentation schématique de la coupe 4A, les filaments de verre 37' et les filaments de polypropylène 38' sont moins bien mêlés. En particulier, on note la présence d'amas importants de filaments de verre 37' et de filaments de polypropylène 38', ces derniers étant répartis préférentiellement à la périphérie du fil.

Il est possible d'apporter quelques modifications aux dispositifs selon l'invention qui viennent d'être décrits. Tout d'abord, il est possible d'utiliser un ensimage constitué de plusieurs solutions, aqueuses ou non, comprenant des composés susceptibles de co-polymériser dans un temps relativement court lorsqu'ils sont mis en contact les uns avec les autres. Dans ce cas, le dispositif enducteur comprend des rouleaux séparés, chacun d'eux déposant sur les filaments de verre une des solutions d'ensimage. Il est également possible de prévoir un dispositif de séchage permettant d'éliminer l'eau des filaments de verre, ou tout au moins d'en réduire notablement la teneur, avant le bobinage.

Dans la mise en oeuvre du procédé selon l'invention, on peut utiliser tout type de verre connu, par exemple le verre AR, R, S ou E, ce dernier étant préféré.

De la même manière, il est possible d'utiliser toute matière organique à caractère thermoplastique, les matières préférées étant le polyéthylène, le polypropylène, le polyéthylènetéréphtalate, le polybutylènetéréphtalate, le polyamide-6, le polyamide-6,6 et le polyamide-12.

Il est également possible d'associer l'invention à la réalisation de fils composites complexes, c'est-à-dire de fils composites comportant différentes matières organiques thermoplastiques. Pour cela, il est possible de former des filaments de nature différente, par exemple à partir d'une ou plusieurs têtes de filage, et de les projeter, sous forme individualisée ou après les avoir assemblés, sur les filaments de verre.

## Revendications

1. Procédé de fabrication d'un fil composite (9, 10, 27) formé par l'entremêlement de filaments continus de verre (2, 34) issus d'une filière (2) et de filaments continus d'une matière organique thermoplastique (8, 14) issus d'au moins une tête de filage (11), **caractérisé en ce que** l'on sépare les filaments de verre en plusieurs faisceaux (2a, 2b) ou nappes (34a, 34b), on sépare les filaments thermoplastiques en plusieurs nappes (14a, 14b) et on projette les filaments thermoplastiques dans les filaments de verre, au moins une nappe (14a, 14b) de filaments thermoplastiques étant projeté dans chaque faisceau (2a, 2b) ou nappe (34a, 34b) de filaments de verre, et on rassemble les filaments entremêlés (25a, 25b) en au moins un fil composite (9,10, 27) entraîné mécaniquement.

2. Procédé selon la revendication 1, **caractérisé en ce que** l'on forme autant de nappes (14a, 14b) de filaments thermoplastiques que de faisceaux (2a, 2b) ou de nappes (34a, 34b) de filaments de verre.

3. Procédé selon la revendication 1, **caractérisé en ce que** l'on sépare les filaments de verre en faisceaux (2a, 2b) ou en nappes (34a, 34b) identiques.

4. Procédé selon la revendication 1, **caractérisé en ce que** l'on sépare les filaments thermoplastiques en nappes (14a, 14b) identiques.

5. Procédé selon l'une des revendications 1 à 4, **caractérisé en ce que** l'on projette les nappes (14a, 14b) de filaments thermoplastiques dans les faisceaux (2a, 2b) de filaments de verre, entre la base de la filière (1) et un dispositif enducteur (7).

6. Procédé selon l'une des revendications 1 à 4, **caractérisé en ce que** l'on projette les nappes (14a, 14b) de filaments thermoplastiques dans les filaments de verre sur la génératrice d'un dispositif enducteur (7).

7. Procédé selon l'une des revendications 1 à 4, **caractérisé en ce que** l'on projette les nappes (14a, 14b) de filaments thermoplastiques dans les nappes (34a, 34b) de filaments de verre, entre un dispositif enducteur (7) et des moyens de séparation (3, 4) des filaments de verre.

8. Procédé selon l'une des revendications 1 à 7, **caractérisé en ce que** l'on allonge les filaments thermoplastiques sur un étireur (15, 29) avant de les projeter dans les filaments de verre (2, 34).

9. Procédé selon la revendication 8, **caractérisé en ce que** la vitesse de l'étireur (15, 29) permettant l'allongement des filaments thermoplastiques est supérieure ou égale à la vitesse d'entraînement du fil composite (9, 10, 27).

10. Dispositif pour la fabrication d'un fil composite (9, 10, 27) formé par l'entremêlement de filaments continus de verre (2, 34) et de filaments continus de matière organique thermoplastique (8, 14) comprenant d'une part au moins une filière (1) alimentée en verre fondu dont la face inférieure est munie d'une multiplicité d'orifices, associée à un dispositif enducteur (7), d'autre part, au moins une tête de filage (11) alimentée en matière organique thermoplastique fondue, dont la face inférieure est munie d'une multiplicité d'orifices, associée à un étireur (15, 29) à vitesse variable, et des moyens (3, 4, 26), communs à la filière (1) et à la tête de filage (11 ), permettant l'assemblage et l'étirage du fil composite (9, 10, 27), **caractérisé en ce que** la filière (1) est associée à des moyens (3, 4) permettant de séparer les filaments de verre en plusieurs faisceaux (2a, 2b) ou nappes (34a, 34b) et la tête de filage (11) est associée à des moyens (23, 24) permettant de séparer les filaments thermoplastiques en au moins une nappe (14a, 14a) et de mêler au moins une de ces nappes (14a, 14a) à chaque faisceau (2a, 2b) ou nappe (34a, 34b) de filaments de verre.

11. Dispositif selon la revendication 10, **caractérisé en ce que** les moyens permettant de mêler les filaments thermoplastiques aux filaments de verre sont des dispositifs Venturi (23, 24).

12. Dispositif selon la revendication 11, **caractérisé en ce que** chaque dispositif Venturi (23, 24) est associé à un déflecteur (35, 36) placé devant les filaments de verre.

13. Dispositif selon la revendication 10, **caractérisé en ce que** les moyens (3, 4) permettant la séparation des filaments de verre (2, 34) sont disposés entre un dispositif enducteur (7) et le dispositif permettant d'entraîner mécaniquement le fil composite (9, 10, 27).

## Patentansprüche

1. Verfahren zur Herstellung eines Verbundfadens (9, 10, 27), der durch Vermengen von aus einer Spinndüse (2) kommenden endlosen Glasfilamenten (2, 34) und aus mindestens einem Spinnkopf (11) kommenden endlosen Filamenten (8, 14) aus thermoplastischem organischem Material gebildet wird, **dadurch gekennzeichnet, dass** die Glasfilamente zu mehreren Bündeln (2a, 2b) oder Bahnen (34a, 34b) und die thermoplastischen Filamente zu mehreren Bahnen (14a, 14b) aufgetrennt und die thermoplastischen Filamente in die Glasfilamente geschleudert werden, wobei wenigstens eine Bahn (14a, 14b) aus thermoplastischen Filamenten in jeweils ein Bündel (2a, 2b) oder eine Bahn (34a, 34b) aus Glasfilamenten geschleudert wird, und die miteinander vermengten Filamente (25a, 25b) zu mindestens einem mechanisch gezogenen Verbundfaden (9, 10, 27) vereinigt werden.

2. Verfahren nach Anspruch 1, **dadurch gekennzeichnet, dass** so viele Bahnen (14a, 14b) aus thermoplastischen Filamenten wie Bündel (2a, 2b) oder Bahnen (34a, 34b) aus Glasfilamenten gebildet werden.

3. Verfahren nach Anspruch 1, **dadurch gekennzeichnet, dass** die Glasfilamente zu gleichen Bündeln (2a, 2b) oder Bahnen (34a, 34b) aufgetrennt werden.

4. Verfahren nach Anspruch 1, **dadurch gekennzeichnet, dass** die thermoplastischen Filamente zu gleichen Bahnen (14a, 14b) aufgetrennt werden.

5. Verfahren nach einem der Ansprüche 1 bis 4, **dadurch gekennzeichnet, dass** die Bahnen (14a, 14b) aus thermoplastischen Filamenten zwischen dem Boden der Spinndüse ( 1 ) und einer Beschichtungseinrichtung (7) in die Bündel (2a, 2b) aus Glasfilamenten geschleudert werden.

6. Verfahren nach einem der Ansprüche 1 bis 4, **dadurch gekennzeichnet, dass** die Bahnen (14a, 14b) aus thermoplastischen Filamenten auf der Erzeugenden einer Beschichtungseinrichtung (7) in die Glasfilamente geschleudert werden.

7. Verfahren nach einem der Ansprüche 1 bis 4, **dadurch gekennzeichnet, dass** die Bahnen (14a, 14b) aus thermoplastischen Filamenten zwischen einer Beschichtungseinrichtung (7) und Trennmitteln (3, 4) für die Glasfilamente in die Bahnen (34a, 34b) aus Glasfilamenten geschleudert werden.

8. Verfahren nach einem der Ansprüche 1 bis 7, **dadurch gekennzeichnet, dass** die thermoplastischen Filamente auf einer Zieheinrichtung (15, 29) gedehnt werden, bevor sie in die Glasfilamente (2, 34) geschleudert werden.

9. Verfahren nach Anspruch 8, **dadurch gekennzeichnet, dass** die Geschwindigkeit der Zieheinrichtung (15, 29), welche die Dehnung der thermoplastischen Filamente ermöglicht, höher oder gleich der Ziehgeschwindigkeit des Verbundfadens (9, 10, 27) ist.

10. Vorrichtung zur Herstellung eines Verbundfadens (9, 10, 27), der durch Vermengen endloser Glasfilamente (2, 34) mit endlosen Filamenten (8, 14) aus thermoplastischem organischem Material gebildet wird, die einerseits mindestens eine Spinndüse (1), der Glasschmelze zugeführt wird, deren Unterseite mit einer Vielzahl von Öffnungen versehen und welche mit einer Beschichtungseinrichtung (7) verbunden ist, und andererseits mindestens einen Spinnkopf (11), dem geschmolzenes thermoplastisches organisches Material zugeführt wird, dessen Unterseite mit einer Vielzahl von Öffnungen versehen und welcher mit einer Zieheinrichtung (15, 29) mit veränderbarer Geschwindigkeit verbunden ist, und Mittel (3, 4, 26), die Spinndüse (1) und Spinnkopf (11) gemeinsam sind und das Vereinigen und Ziehen des Verbundfadens (9, 10, 27) erlauben, umfasst, **dadurch gekennzeichnet, dass** die Spinndüse (1) mit Mitteln (3, 4) verbunden ist, die es ermöglichen, die Glasfilamente zu mehreren Bündeln (2a, 2b) oder Bahnen (34a, 34b) aufzutrennen, und der Spinnkopf (11) mit Mitteln (23, 24) verbunden ist, die es ermöglichen, die thermoplastischen Filamente zu mindestens einer Bahn (14a, 14b) aufzutrennen und mindestens eine der Bahnen (14a, 14b) mit jedem Bündel (2a, 2b) oder jeder Bahn (34a, 34b) aus Glasfilamenten zu vermengen.

11. Vorrichtung nach Anspruch 10, **dadurch gekennzeichnet, dass** die Mittel, welche es ermöglichen, die thermoplastischen Filamente mit den Glasfilamenten zu vermengen, Venturi-Einrichtungen (23, 24) sind.

12. Vorrichtung nach Anspruch 11, **dadurch gekennzeichnet, dass** jede Venturi-Einrichtung (23, 24) mit einer vor den Glasfilamenten angeordneten Ablenkeinrichtung (35, 36) verbunden ist.

13. Vorrichtung nach Anspruch 10, **dadurch gekennzeichnet, dass** die Mittel (3, 4), die das Auftrennen der Glasfilamente (2, 34) ermöglichen, zwischen einer Beschichtungseinrichtung (7) und der Einrichtung angeordnet sind, die es erlaubt, den Verbundfaden (9, 10, 27) mechanisch zu ziehen.

## Claims

1. Method for producing a composite thread (9, 10, 27) which is formed by the intermingling of continuous glass filaments (2, 34) originating from a die (2) and continuous filaments of an organic thermoplastic material (8, 14) originating from at least one extrusion head (11), **characterised in that** the glass filaments are separated into a plurality of bundles (2a, 2b) or sheets (34a, 34b), the thermoplastic filaments are separated into a plurality of sheets (14a, 14b) and the thermoplastic filaments are *projected* into the glass filaments, at least one sheet (14a, 14b) of thermoplastic filaments being projected into each bundle (2a, 2b) or sheet (34a, 34b) of glass filaments, and **in that** the intermingled filaments (25a, 25b) are *gathered* into at least one composite thread (9, 10, 27) which is *driven* mechanically.

2. Method according to claim 1, **characterised in that** as many sheets (14a, 14b) of thermoplastic filaments are formed as bundles (2a, 2b) or sheets (34a, 34b) of glass filaments.

3. Method according to claim 1, **characterised in that** the glass filaments are separated into identical bundles (2a, 2b) or sheets (34a, 34b).

4. Method according to claim 1, **characterised in that** the thermoplastic filaments are separated into identical sheets (14a, 14b).

5. Method according to any one of claims 1 to 4, **characterised in that** the sheets (14a, 14b) of thermoplastic filaments are projected into the bundles (2a, 2b) of glass filaments, between the base of the die (1) and a coating device (7).

6. Method according to any one of claims 1 to 4, **characterised in that** the sheets (14a, 14b) of thermoplastic filaments are projected into the glass filaments *on the generator* of a coating device (7).

7. Method according to any one of claims 1 to 4, **characterised in that** the sheets (14a, 14b) of thermoplastic filaments are projected into the sheets (34a, 34b) of glass filaments, between a coating device (7) and means (3, 4) for separating the glass filaments.

8. Method according to any one of claims 1 to 7, **characterised in that** the thermoplastic filaments are extended on a tenter (15, 29) before they are projected into the glass filaments (2, 34).

9. Method according to claim 8, **characterised in that** the speed of the tenter (15, 29) which allows the thermoplastic filaments to be extended is greater than or equal to the driving speed of the composite thread (9, 10, 27).

10. Device for producing a composite thread (9, 10, 27) formed by the intermingling of continuous glass filaments (2, 34) and continuous filaments (8, 14) of organic thermoplastic material, which device comprises, on the one hand, at least one die (1) which is supplied with molten glass, whose lower face is provided with a multiplicity of openings and which is associated with a coating device (7), and, on the other hand, at least one extrusion head (11) which is supplied with molten organic thermoplastic material, whose lower face is provided with a multiplicity of openings and which is associated with a variable-speed tenter (15, 29), and means (3, 4, 26) which are common to the die (1) and the extrusion head (11) and which allow the assembly and the drawing of the composite thread (9, 10, 27), **characterised in that** the die (1) is associated with means (3, 4) which allow the glass filaments to be separated into a plurality of bundles (2a, 2b) or sheets (34a, 34b) and the extrusion head (11) is associated with means (23, 24) which allow the thermoplastic filaments to be separated into at least one sheet (14a, 14a) and at least one of these sheets (14a, 14a) to be mingled with each bundle (2a, 2b) or sheet (34a, 34b) of glass filaments.

11. Device according to claim 10, **characterised in that** the means which allow the thermoplastic filaments to be mingled with the glass filaments are Venturi devices (23, 24).

12. Device according to claim 11, **characterised in that** each Venturi device (23, 24) is associated with a deflector (35, 36) placed in front of the glass filaments.

13. Device according to claim 10, **characterised in that** the means (3, 4) which allow the glass filaments (2, 34) to be separated are arranged between a coating device (7) and the device which allows the composite thread (9, 10, 27) to be mechanically driven.
